## Europäisches Patentamt

## European Patent Office

## Office européen des brevets

(19)

(11) **EP 1 162 802 B1**

(12) **FASCICULE DE BREVET EUROPEEN**

(45) Date de publication et mention
de la délivrance du brevet:
**17.08.2005 Bulletin 2005/33**

(51) Int Cl.⁷: **H04L 25/03**

(21) Numéro de dépôt: **00111847.0**

(22) Date de dépôt: **08.06.2000**

(54) **Egalisateur utilisant un canal transformé.**

Entzerrer, eine Kanalumwandlung verwendend.

Equaliser using a transformed channel.

(84) Etats contractants désignés:
**DE FR GB IT**

(43) Date de publication de la demande:
**12.12.2001 Bulletin 2001/50**

(73) Titulaire: **STMicroelectronics N.V.**
**1077 XX Amsterdam (NL)**

(72) Inventeur: **Bonhomme Corinne**
**01630 Sergy (FR)**

(74) Mandataire: **Casalonga, Axel et al**
**BUREAU D.A. CASALONGA - JOSSE**
**Paul-Heyse-Strasse 33**
**80336 München (DE)**

(56) Documents cités:
**US-A- 5 251 237**          **US-A- 6 044 111**

**Description**

L'invention concerne la transmission d'informations numériques, et notamment l'égalisation d'un signal numérique reçu.

L'invention concerne également plus particulièrement l'extraction de données numériques contenues dans un signal véhiculé par un canal de transmission d'informations comportant un émetteur d'informations, un récepteur d'informations et un moyen de propagation s'étendant entre l'émetteur et le récepteur.

L'invention s'applique notamment mais non exclusivement au domaine du téléphone mobile cellulaire tel que celui prévu dans la norme GSM.

Le moyen de propagation peut être de l'air dans le cas des téléphones mobiles cellulaires, ou bien tout autre moyen de propagation tel qu'un câble, par exemple dans d'autres applications.

Un facteur fondamental de limitation des performances d'un système de communication numérique est le phénomène bien connu de l'homme du métier et dénommé "interférence inter-symboles".

Une telle interférence inter-symboles provoque au niveau du récepteur une occupation temporelle de chaque symbole ("bit", par exemple) transmis, plus longue que la durée initiale dudit symbole (encore appelée "temps bit", par exemple).

En d'autres termes, le signal reçu à un instant donné ne dépend pas d'un seul symbole ("bit" par exemple) mais également des autres bits ou symboles émis qui s'étendent sur des durées supérieures à celles d'un temps bit.

En pratique, le signal reçu à un instant donné dépend du symbole considéré, mais également essentiellement des symboles adjacents.

Les causes des interférences inter-symboles sont multiples.

L'une d'entre elles est due notamment aux propagations multiples du signal entre l'émetteur et le récepteur lorsque le signal est réfléchi ou diffracté par différents obstacles, conduisant à la réception, à plusieurs copies du signal mutuellement décalée temporellement.

D'autres causes perturbent l'analyse des symboles reçus. Il s'agit notamment des additions de signaux divers et de bruits, tels que les bruits thermiques, les émissions diverses des autres émetteurs, et la plupart des autres interférences provoquées par les autres émetteurs (GSM par exemple) utilisant la même bande de fréquences au même moment ou bien une bande adjacente.

Par ailleurs, non seulement les moyens de propagation entre l'émetteur et le récepteur engendrent ces interférences entre symboles, mais également les dispositifs d'émission-réception eux-mêmes (modulateur, filtre, ...).

Lors des communications avec interférence entre symboles, se pose le problème d'estimer la réponse impulsionnelle du canal de transmission. La qualité de cette estimation dépend de la capacité que l'on a à supprimer l'interférence entre symboles, et donc à prendre des décisions correctes sur des symboles émis.

Généralement, l'estimation de la réponse impulsionnelle du canal, ou plus simplement "estimation de canal", s'effectue, dans le domaine du téléphone GSM notamment, en utilisant des techniques de moindres carrés, et en utilisant une séquence de symboles prédéterminée et connue de l'émetteur et du récepteur, et dénommée par l'homme du métier sous le vocable de "séquence d'apprentissage" ("training sequence" en langue anglaise). Cette séquence d'apprentissage est présente au sein de chaque train ("burst") de symbole émis.

Lorsque les caractéristiques du canal sont suffisamment bien estimées, on utilise les coefficients estimés de la réponse impulsionnelle du canal dans un traitement dit "d'égalisation", voir le brevet Etats-Unis de Wolfgang Gerstacker "Equalizer with a Sequence Estimation Method with State Reduction for a Receiver in a Digital Transmission System", US-A-6 044 111, 28 mars 2000, également bien connu de l'homme du métier, pour décoder le signal reçu, c'est-à-dire retrouver les valeurs logiques des bits (données) émis dans le train.

Le traitement d'égalisation est classiquement suivi par les traitements dits "de décodage de canal" destinés à reconstituer les informations (parole, par exemple), initialement codées au niveau de l'émetteur.

Il existe de nombreux algorithmes d'égalisation, bien connus de l'homme du métier.

Parmi ces traitements d'égalisation, on peut considérer deux grandes classes :

- celles qui font la détection symbole par symbole, comme par exemple l'algorithme connu par l'homme du métier sous le vocable DFE (Decision Feedback Equalisation) et dont les aspects essentiels sont par exemple décrits dans l'ouvrage de John G. Proakis, intitulé "Digital Communications", troisième édition, McGraw-Hill, Inc.,
- et celles qui font de la détection de séquence de symboles, comme par exemple l'algorithme connu sous le vocable MLSE ("Maximum-Likelihood Sequence Estimation"), ou celui connu sous le vocable DFSE ("Decision Feedback Sequence Estimation" en langue anglaise), également bien connu de l'homme du métier. Ces deux algorithmes ont fait l'objet de nombreuses publications. L'homme du métier pourra notamment se référer, en ce qui concerne l'algorithme MLSE, à l'ouvrage de John G. Proakis précité, et en ce qui concerne l'algorithme DFSE, à l'article de Hans C. Guren et Nils Holte, intitulé "Decision Feedback Sequence Estimation for Continuous Phase Modulation on a Linear Multipath Channel", IEEE Transactions on Communications, Vol. 41, N° 2, Février 1993.

Les algorithmes de détection symbole par symbole, ont une complexité faible par rapport aux algorithmes de détection par séquence, mais donnent des performances inférieures.

C'est la raison pour laquelle il est généralement choisi de préférence des algorithmes d'égalisation utilisant une estimation par séquence.

Cependant, l'algorighme MLSE, qui est un algorithme optimal, s'avère dans certaines applications, notamment dans le cas des modulations en quadrature (modulations "M-airs"), difficilement implémentable en raison de sa complexité. On peut notamment citer une modulation QPSK (2 bits par symbole) ou 8PSK (3 bits par symbole), selon des dénominations bien connues de l'homme du métier.

Dans de telles applications, on utilise alors de préférence l'algorithme DFSE, qui permet également de faire de la détection de séquence, en réduisant par exemple le nombre d'états du treillis utilisé dans cet algorithme par un mécanisme de retour de décision. On obtient alors une complexité moindre, donc une implémentation plus aisée, mais des performances moindres.

L'invention vise à améliorer les performances des égaliseurs habituellement utilisés, notamment dans le cas de l'égaliseur DFSE en réduisant les erreurs induites par le mécanisme de retour de décision.

Bien que l'invention puisse s'appliquer à tout type d'algorithme d'égalisation, en particulier l'algorithme MLSE, elle s'applique avantageusement à l'algorithme DFSE et a pour but d'en augmenter les performances de manière conséquente tout en réduisant la complexité de cet algorithme en utilisant par exemple des treillis de taille réduite, par exemple des treillis à 8 états pour une modulation 8PSK.

L'invention propose donc un procédé d'extration de données numériques contenues dans un signal véhiculé par un canal de transmission d'informations comportant un émetteur d'informations, un récepteur d'informations et un moyen de propagation s'étendant entre l'émetteur et le récepteur.

Selon une caractéristique générale de l'invention, ce procédé comprend, au niveau du récepteur

- un traitement d'estimation de la réponse impulsionnelle du canal de transmission,
- un traitement de transformation comportant une détermination à partir de la réponse impulsionnelle estimée du canal de transmission, d'une réponse impulsionnelle transformée dite "à minimum de phase", correspondant à un canal transformé, et un filtrage du signal reçu par un filtre permettant de conserver une égalité entre l'auto-corrélation du signal reçu et l'auto-corrélation du signal filtré, et
- un traitement d'égalisation appliqué sur le signal filtré en tenant compte de la réponse impulsionnelle transformée.

L'invention est donc remarquable en ce sens qu'elle applique un traitement d'égalisation, tel qu'un traitement classique d'égalisation, non pas directement sur le signal reçu compte tenu de la réponse impulsionnelle du canal de transmission, mais sur un canal transformé, en l'espèce un canal dont la réponse impulsionnelle est à minimum de phase, et sur un signal filtré. Une réponse impulsionnelle à minimum de phase est une réponse impulsionnelle dont tous les zéros de la fonction de transfert (en l'espèce, toutes les racines du polynôme représentatif de cette réponse impulsionnelle) se situent à l'intérieur du cercle unité. La réponse impulsionnelle est donc "plus stable" et, le fait d'obtenir une réponse impulsionnelle plus stable, ce qui revient en fait à ramener l'énergie en début de réponse impulsionnelle, améliore considérablement les performances d'un algorithme d'égalisation, tout particulièrement un algorithme du type DFSE qui utilise un mécanisme de retour de décision. Or, si une erreur de décision survient, elle s'en trouve propagée par le mécanisme de retour de décision. Et, le fait d'appliquer le traitement d'égalisation en tenant compte d'une réponse impulsionnelle à minimum de phase, permet de minimiser fortement ces erreurs.

Bien entendu, en combinaison avec cette transformation de la réponse impulsionnelle du canal, il convient de filtrer le signal reçu par un filtre qui permet notamment de conserver une égalité entre l'auto-corrélation du signal reçu et l'auto-corrélation du signal filtré, de façon à ne pas fausser l'extraction ultérieure des données par le traitement d'égalisation. En fait, le traitement de transformation selon l'invention permet de conserver ainsi toutes les auto-corrélations, c'est-à-dire de préserver notamment l'égalité entre l'auto-corrélation du signal reçu et l'auto-corrélation du signal filtré, mais également l'auto-corrélation entre la réponse impulsionnelle du canal et la réponse impulsionnelle du canal transformé, ou encore l'auto-corrélation entre un signal de bruit et le signal de bruit filtré (auto-corrélation du bruit additif).

Plusieurs variantes sont possibles pour déterminer la réponse impulsionnelle transformée à partir de la réponse impulsionnelle estimée du canal de transmission. Une première possibilité peut consister à déterminer cette réponse impulsionnelle transformée à partir d'une auto-corrélation de la réponse impulsionnelle estimée du canal de transmission.

On peut également déterminer, selon une autre variante, la réponse impulsionnelle transformée à partir d'une décomposition du polynôme représentatif de la réponse impulsionnelle du canal de transmission, en le produit d'un premier polynôme dont les racines ont toutes un module supérieur à 1, et d'un deuxième polynôme dont les racines ont toutes un module inférieur à 1.

L'invention a également pour objet un dispositif d'extraction de données numériques contenues dans un signal véhiculé par un canal de transmission d'informations comportant un émetteur d'informations, un récepteur d'informations et un moyen de propagation s'étendant entre l'émetteur et le récepteur.

Selon une caractéristique générale de l'invention, le dispositif comprend, dans le récepteur

- des moyens d'estimation aptes à effectuer un traitement d'estimation de la réponse impulsionnelle du canal de transmission,
- des moyens de transformation comportant un bloc de prétraitement apte à déterminer à partir de la réponse impulsionnelle estimée du canal de transmission, une réponse impulsionnelle transformée dite "à minimum de phase" correspondant à un canal transformé, et un filtre apte à effectuer un filtrage de signal reçu permettant de conserver une égalité entre l'auto-corrélation du signal reçu et l'auto-corrélation du signal filtré, et
- un égaliseur apte à appliquer un traitement d'égalisation sur le signal filtré en tenant compte de ladite réponse impulsionnelle transformée.

Selon un mode de réalisation de l'invention, le bloc de prétraitement est apte à déterminer la réponse impulsionnelle transformée à partir d'une auto-corrélation de la réponse impulsionnelle estimée du canal de transmission.

Selon un autre mode de réalisation de l'invention, le bloc de traitement détermine la réponse impulsionnelle transformée à partir d'une décomposition du polynôme représentatif de la réponse impulsionnelle du canal de transmission en le produit d'un premier polynôme dont les racines ont toutes un module supérieur à 1, et d'un deuxième polynôme dont les racines ont toutes un module inférieur à 1.

L'invention propose également un récepteur numérique, en particulier un téléphone mobile cellulaire incorporant un dispositif d'extraction de données numériques tel que défini ci-avant.

L'invention propose également un programme d'ordinateur comprenant des moyens de code-programme mettant en oeuvre le procédé d'extraction de données tel que défini ci-avant, lorsque ledit programme est effectué au sein d'un processeur.

L'invention propose encore un support, par exemple une mémoire morte, capable d'être lu par un processeur, et contenant des moyens de code-programme aptes à mettre en oeuvre le procédé d'extraction tel que défini ci-avant, lorsque ledit programme est exécuté au sein du processeur.

D'autres avantages et caractéristiques de l'invention apparaîtront à l'examen de la description détaillée de modes de réalisation et de mise en oeuvre, nullement limitatifs, et des dessins annexés, sur lesquels :

- la figure 1 illustre schématiquement les constituants essentiels d'un émetteur et d'un récepteur, permettant la mise en oeuvre du procédé selon l'invention;
- la figure 2 illustre une première variante de l'invention;
- la figure 3 illustre schématiquement une deuxième variante de l'invention; et
- la figure 4 illustre schématiquement une troisième variante de l'invention.

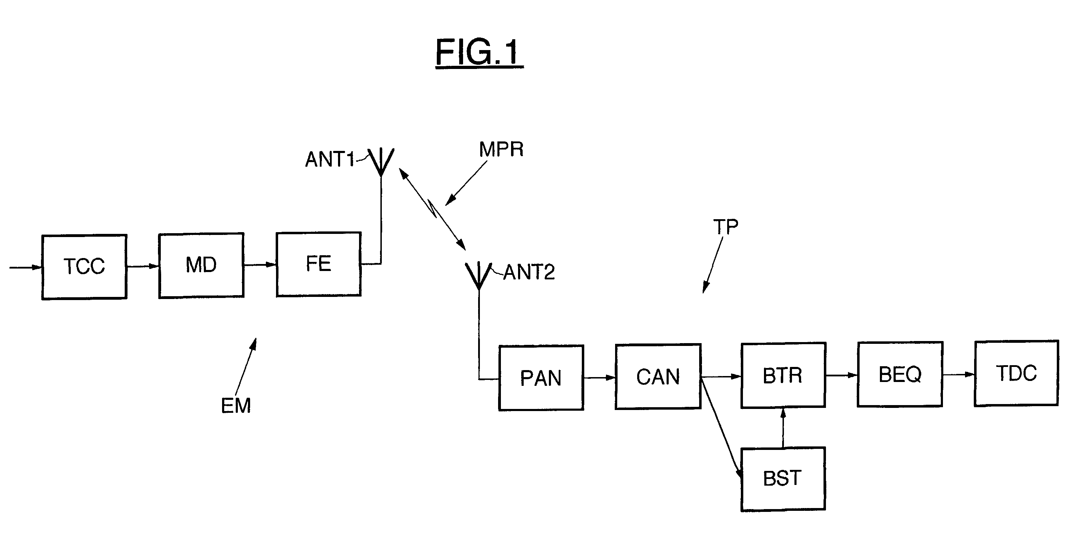

On suppose maintenant, en se référant plus particulièrement à la figure 1, que l'invention s'applique par exemple au domaine des téléphones mobiles cellulaires, par exemple ceux du réseau GSM.

Sur la figure 1, la référence EM désigne un émetteur comportant en amont un bloc de codage TCC, recevant les données utiles à transmettre, par exemple de la parole, et effectuant notamment des traitements dits "de codage de canal", introduisant des redondances dans le flot de données, de l'entrelacement, du cryptage et du formatage. La sortie du bloc TCC consiste en des blocs d'informations binaires.

Le bloc TCC est suivi classiquement d'un modulateur MD effectuant par exemple une modulation en quadrature du type QPSK ou 8PSK, selon une dénomination bien connue de l'homme du métier, et transformant le signal binaire en un signal analogique. Ce signal analogique est ensuite filtré dans un filtre d'émission FE avant d'être émis en direction des récepteurs via une antenne ANT1.

Le moyen de propagation MPR entre un émetteur EM et un récepteur TP, constitué ici d'un téléphone mobile cellulaire, est dans le cas présent l'air.

Le récepteur TP, ou téléphone mobile cellulaire, comporte essentiellement en tête une antenne ANT2 couplée à un étage analogique PAN, réalisant essentiellement une conversion de fréquence pour ramener le signal modulé reçu en bande de base, et un filtrage pour ne conserver que la partie utile du spectre. Après conversion analogique-numérique dans un convertisseur CAN, l'étage numérique a pour rôle de produire une estimation du canal de transmission, de supprimer grâce à cette estimation l'interférence inter-symboles (par un traitement d'égalisation), et d'effectuer en général une correction d'erreur, c'est-à-dire un décodage de canal comportant notamment de façon classique un décodage de Viterbi, un désentrelacement, etc...

Fonctionnellement, l'étage numérique comporte un bloc BST destiné à effectuer l'estimation de la réponse impulsionnelle du canal de transmission, un bloc BTR comportant un bloc de prétraitement destiné à effectuer un traitement de transformation de la réponse impulsionnelle du canal ainsi qu'un filtre numérique effectuant un filtrage du signal reçu. La sortie du bloc BTR est délivrée à un bloc BEQ destiné à effectuer le traitement d'égalisation, les traitements ultérieurs de décodage de canal étant effectués dans un bloc de décodage de canal TDC.

Matériellement, ces blocs sont réalisés de façon logicielle et implémentés au sein d'un microprocesseur, par exemple un microprocesseur de traitement du signal, associé à une mémoire morte et/ou à une mémoire vive.

Le canal de transmission est formé des éléments situés en amont du bloc estimateur de canal, c'est-à-dire notamment des dispositifs analogiques d'émission et de réception ainsi que du moyen de propagation physique proprement dit MPR.

La réponse impulsionnelle R(z) du canal de transmission est un polynôme en $z^{-1}$ dont le nombre de coefficients est prédéterminé et dépend notamment des caractéristiques des dispositifs d'émission et de réception, mais également de l'environnement de propagation du signal (trajet collineux, urbain, ...).

En d'autres termes, R(z) est défini par la formule(1) ci-dessous :

$$R(z) = \sum_i r_i \, z^{-i} \qquad\qquad (1)$$

dans laquelle $r_i$ sont les coefficients complexes du polynôme, que l'on cherche à estimer.

Cette estimation est effectuée de façon classique et connue par l'homme du métier. En général, on utilise plus précisément une estimation dite "entraînée", c'est-à-dire utilisant des séquences d'apprentissage formées de successions de bits de valeur connue. Dans ce cas, chaque séquence de signal reçu S est définie par la formule matricielle (2) ci-dessous :

$$S = A \cdot R + N \qquad\qquad (2)$$

dans laquelle A désigne la matrice représentative de la séquence d'apprentissage, R représente le vecteur formé des coefficients $r_i$ de la réponse impulsionnelle du canal, et N un vecteur additionnel représentatif des interférences et du bruit thermique.

Une façon classique de résoudre ce système, c'est-à-dire d'estimer les coefficients $r_i$ de la réponse impulsionnelle R du canal, consiste à utiliser une méthode des moindres carrés qui vise à déterminer R comme étant le vecteur minimisant le bruit N.

L'homme du métier sait alors que le vecteur R est défini par la formule (3) ci-dessous :

$$R = (A^H A)^{-1} A^H S \qquad\qquad (3)$$

dans laquelle l'annotation "H" désigne la matrice transposée conjuguée.

Bien entendu, d'autres méthodes sont également utilisables pour estimer les coefficients de la réponse impulsionnelle du canal. Ces autres méthodes sont également bien connues de l'homme du métier et l'on ne reviendra pas plus en détail ici sur celles-ci.

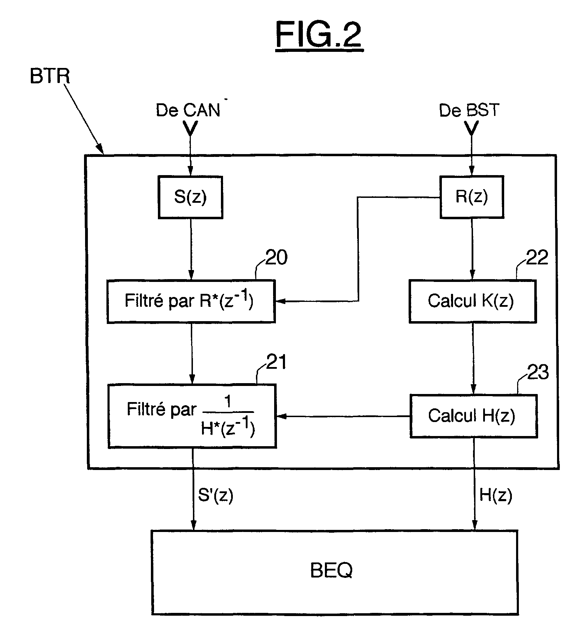

On se réfère maintenant plus particulièrement aux figures 2 à 4, pour décrire plus en détail différentes variantes du traitement de transformation effectué dans le bloc BTR.

Quelles que soient ces variantes, le traitement de transformation effectué dans le bloc BTR comporte une détermination d'une réponse impulsionnelle transformée, dite "à minimum de phase", correspondant à un canal transformé, et un filtrage du signal reçu par un filtre permettant de conserver une égalité entre l'auto-corrélation du signal reçu et l'auto-corrélation du signal filtré.

Sur la figure 2, la détermination de la réponse impulsionnelle transformée H(z) du canal transformé est effectuée à partir d'une auto-corrélation de la réponse impulsionnelle estimée R(z) du canal de transmission.

Plus précisément, on calcule à partir de la réponse impulsionnelle estimée R(z) du canal de transmission, issue du bloc BST, l'auto-corrélation K(z) de la réponse impulsionnelle estimée R(z) du canal (étape 22).

Plus précisément, K(z) est défini par la formule (4) ci-dessous :

$$K(z) = R(z) \cdot R^* (z^{-1}) \qquad\qquad (4)$$

dans laquelle l'annotation "*" représente le conjugué complexe.

En d'autres termes, R* ($z^{-1}$) est défini par la formule (5) ci-dessous :

$$R^* (z^{-1}) = \sum_i r_i^* \, z^i \qquad\qquad (5)$$

En notation matricielle, l'homme du métier sait que la formule (4) se traduit par la formule (6) ci-dessous :

$$K = R \cdot R^H \qquad\qquad (6)$$

dans laquelle K est alors une matrice hermitienne définie positive.

Pour déterminer la réponse impulsionnelle transformée à minimum de phase H(z), on cherche à décomposer l'auto-corrélation K définie par la formule (4) en le produit défini par la formule (7) ci-dessous :

$$K(z) = H(z) \, H^* (z^{-1}) \qquad\qquad (7)$$

L'homme du métier connaît de nombreuses méthodes pour effectuer une telle transformation.

A titre indicatif, on peut citer la méthode de décomposition matricielle triangulaire décrite dans l'article de Rissanen, intitulé "Algorithms for Triangular Decomposition of Block Hankel and Toeplitz Matrices with Application to Factoring Positive Matrix Polynomials", Mathematics of Computation, Volume 27, N° 121, Janvier 1973.

Plus précisément, selon cette méthode, la matrice K définie par la formule (6) peut être décomposée en deux matrices triangulaire inférieure et triangulaire supérieure, qui sont les matrices H et $H^H$.

On prend alors la dernière ligne de la matrice triangulaire inférieure (par exemple), ce qui fournit alors les coefficients $h_i$ de la réponse impulsionnelle transformée à minimum de phase H(z) (étape 23).

Cette réponse impulsionnelle transformée H(z), qui est également un polynôme en $z^{-1}$, est dite "à minimum de phase", car toutes les racines de ce polynôme sont situées à l'intérieur du cercle unité, c'est-à-dire qu'elles ont toutes un module inférieur à 1.

Parallèlement à ce calcul de la réponse impulsionnnelle transformée H(z), on filtre successivement le signal reçu S(z) par deux filtres numériques (étapes 20 et 21), ayant respectivement comme réponse impulsionnelle R* ($z^{-1}$) et 1/ $H^*$ ($z^{-1}$). La transformée en z du signal filtré S'(z) est donc définie par la formule (8) ci-dessous :

$$S'(z) = S(z) \cdot R^* (z^{-1}) / H^* (z^{-1}) \qquad\qquad (8)$$

L'homme du métier remarque donc que l'auto-corrélation du signal filtré S' est égale à l'auto-corrélation du signal S.

Le bloc d'égalisation BEQ va ensuite appliquer un traitement d'égalisation sur le signal filtré S', compte tenu de la réponse impulsionnelle transformée H.

Le traitement d'égalisation qui est appliqué dans le bloc BEQ est un traitement d'égalisation classique mettant en oeuvre, par exemple, soit l'algorithme MLSE lorsqu'il peut être implémenté, soit l'algorithme DFSE ou encore l'algorithme DFE.

Dans l'art antérieur, de tels algorithmes d'égalisation résolvent l'équation définie par la formule (9) ci-dessous (transformée en z) :

$$S(z) = b(z) \, R(z) + N(z) \qquad\qquad (9)$$

dans laquelle S(z) désigne la séquence de bits reçus (le signal reçu), b(z) désigne les bits utiles du train d'impulsion à décoder, R(z) la réponse impulsionnelle du canal de transmission et N(z) le bruit.

Selon l'invention, ces mêmes algorithmes d'égalisation vont maintenant résoudre l'équation définie par la formule (10) ci-dessous :

$$S'(z) = b(z)H(z) + N'(z) \qquad (10)$$

dans laquelle S'(z) désigne le signal filtré, b(z) désigne toujours les bits utiles du train d'impulsion à décoder, H(z) la réponse impulsionnelle transformée du canal et N'(z) le bruit filtré défini par la formule (11) ci-dessous :

$$N'(z) = N(z) \, R^*(z^{-1}) \, / \, H^*(z^{-1}) \qquad (11)$$

L'homme du métier remarque alors que l'auto-corrélation de la réponse impulsionnelle du bruit filtré N'(z) est égale à l'auto-corrélation du bruit N(z). Par ailleurs, le filtre utilisé dans le bloc de transformation BTR est un filtre passe-tout qui n'amplifie pas le bruit initial.

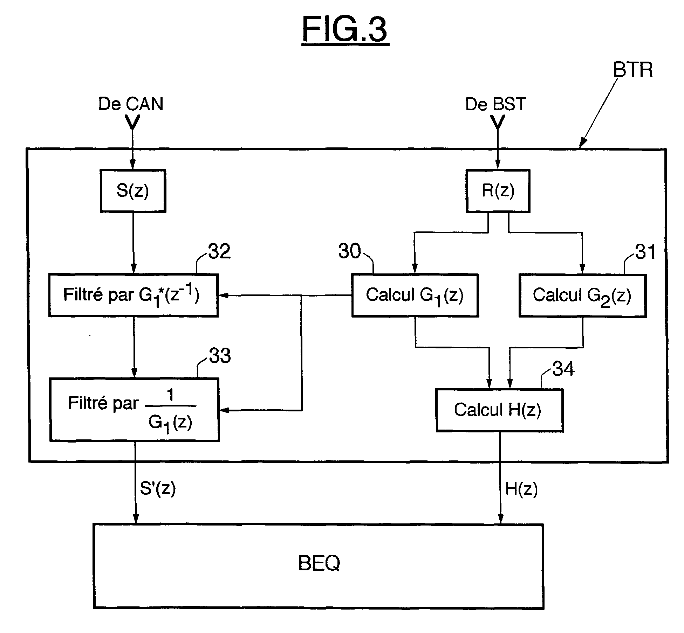

Dans la variante illustrée sur la figure 3, on détermine la réponse impulsionnelle transformée H(z) à partir d'une décomposition polynomiale du polynôme R(z).

Plus précisément, on calcule deux polynômes $G_1(z)$ et $G_2(z)$ (étapes 30 et 31), de telle sorte que les racines de l'un de ces polynômes, par exemple le polynôme $G_2$, aient toutes un module inférieur à 1, tandis que les racines de l'autre polynôme, par exemple le polynôme $G_1$, aient des racines de module supérieur à 1.

De nombreuses méthodes d'extraction de racines de polynômes, et par conséquent de décomposition polynomiale, sont à la disposition de l'homme du métier.

A titre indicatif, on peut par exemple citer l'article de Markus Lang et Bernhard-Christian Frenzel, intitulé : "Polynomial Root Finding", IEEE Signal Processing Letters, Volume 1, N° 10, Octobre 1994.

Ceci étant, de façon à conserver les diverses auto-corrélations, et notamment l'auto-corrélation du signal, on filtre le signal reçu S(z) par deux filtres numériques ayant respectivement des réponses impulsionnelles égales à $G_1^*(z^{-1})$ (étape 32) et $1/\,G_1(z)$ (étape 33).

Le signal filtré S'(z) est alors défini par la formule (12) ci-dessous :

$$S'(z) = S(z) \, G_1^*(z^{-1}) \, / \, G_1(z) \qquad (12)$$

Il en résulte alors que la réponse impulsionnelle transformée H(z) est définie et calculée selon la formule (13) ci-dessous :

$$H(z) = G_1^*(z^{-1}) \, G_2(z) \qquad (13)$$

A cet égard, l'homme du métier aura noté que puisque la réponse impulsionnelle $G_1(z)$ est à maximum de phase, $G_1^*(z^{-1})$ est à minimum de phase.

En conséquence, la réponse impulsionnelle H(z) est le produit de deux réponses impulsionnelles à minimum de phase et est par conséquent elle-même à minimum de phase.

En outre, le filtre $G_1^*(z^{-1}) \, / \, G_1(z)$ est également un filtre passe-tout, ce qui a pour effet de conduire après transformation à un bruit N' défini par la formule (14) ci-dessous :

$$N'(z) = N(z) \, G_1^*(z^{-1}) \, / \, G_1(z) \qquad (14)$$

Le spectre du bruit initial N est ainsi conservé par l'opération de filtrage.

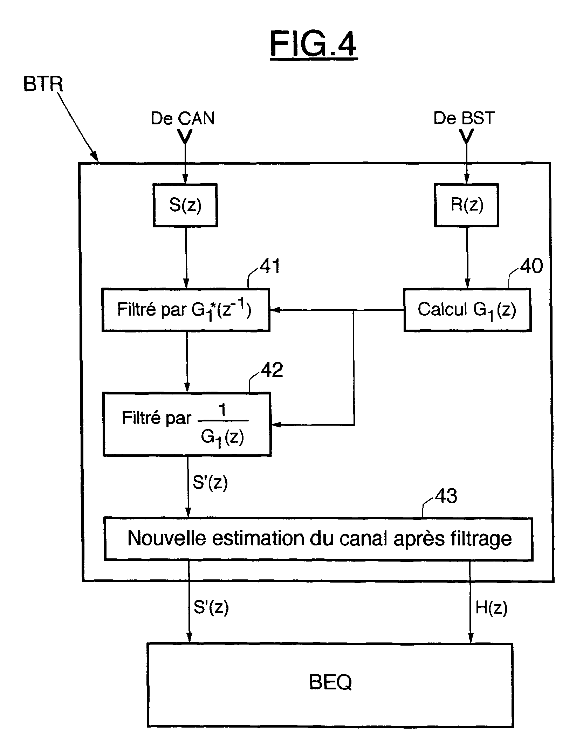

La variante de la figure 4 se distingue de celle de la figure 3 en ce sens que la réponse impulsionnelle transformée du canal transformé n'est pas calculée selon la formule (13), mais réestimée (étape 43) dans le bloc d'estimation de canal BST en utilisant cette fois-ci le signal filtré S' et bien entendu les séquences d'apprentissage. Le signal filtré S' est filtré (étapes 41 et 42) par les mêmes filtres que ceux décrits en référence à la figure 3 et obtenus à partir de la détermination de $G_1(z)$ (étape 40).

Bien entendu, l'invention n'est pas limitée à un téléphone mobile cellulaire, mais s'applique à tout récepteur numérique, en particulier également à une station de base dialoguant avec un téléphone et recevant les informations émises par ce téléphone.

**Revendications**

1.  Procédé d'extraction de données numériques contenues dans un signal véhiculé par un canal de transmission d'informations comportant un émetteur d'informations, un récepteur d'informations et un moyen de propagation s'étendant entre l'émetteur et le récepteur, comprenant au niveau du récepteur (TP),

    un traitement d'estimation de la réponse impulsionnelle (R(z)) du canal de transmission,
    un traitement de transformation comportant une détermination à partir de la réponse impulsionnelle estimée du canal de transmission, d'une réponse impulsionnelle transformée (H(z)) dite à minimum de phase correspondant à un canal transformé, et un filtrage du signal reçu par un filtre permettant de conserver une égalité entre l'auto-corrélation du signal reçu et l'auto-corrélation du signal filtré (S'(z)), et
    un traitement d'égalisation appliqué sur le signal filtré (S'(z)) en tenant compte de ladite réponse impulsionnelle transformée (H(z)).

2.  Procédé selon la revendication 1, **caractérisé par le fait qu'**on détermine la réponse impulsionnelle transformée à partir d'une auto-corrélation (22) de la réponse impulsionnelle estimée du canal de transmission.

3.  Procédé selon la revendication 1, **caractérisé par le fait qu'**on détermine la réponse impulsionnelle transformée à partir d'une décomposition (30, 31) du polynôme représentatif de la réponse impulsionnelle du canal de transmission en le produit d'un premier polynôme ($G_1$) dont les racines ont toutes un module supérieur à 1 et d'un deuxième polynôme ($G_2$) dont les racines ont toutes un module inférieur à 1.

4.  Dispositif d'extraction de données numériques contenues dans un signal véhiculé par un canal de transmission d'informations comportant un émetteur d'informations, un récepteur d'informations et un moyen de propagation s'étendant entre l'émetteur et le récepteur, comprenant dans le récepteur (TP),

    des moyens d'estimation (BST) aptes à effectuer un traitement d'estimation de la réponse impulsionnelle du canal de transmission,
    des moyens de transformation (BTR), comportant un bloc de prétraitement apte à déterminer à partir de la réponse impulsionnelle estimée du canal de transmission, une réponse impulsionnelle transformée dite à minimum de phase correspondant à un canal transformé, et un filtre apte à effectuer un filtrage du signal reçu permettant de conserver une égalité entre l'auto-corrélation du signal reçu et l'auto-corrélation du signal filtré, et
    un égaliseur (BEQ) apte à appliquer un traitement d'égalisation sur le signal filtré en tenant compte de ladite réponse impulsionnelle transformée.

5.  Dispositif selon la revendication 4, **caractérisé par le fait que** le bloc de prétraitement est apte à déterminer la réponse impulsionnelle transformée (H) à partir d'une auto-corrélation de la réponse impulsionnelle estimée (R) du canal de transmission.

6.  Dispositif selon la revendication 4, **caractérisé par le fait que** le bloc de prétraitement détermine la réponse implusionnelle transformée (H) à partir d'une décomposition du polynôme (R) représentatif de la réponse impulsionnelle du canal de transmission en le produit d'un premier polynôme ($G_1$) dont les racines ont toutes un module supérieur à 1 et d'un deuxième polynôme ($G_2$) dont les racines ont toutes un module inférieur à 1.

7.  Récepteur numérique, **caractérisé par le fait qu'**il incorpore un dispositif tel que défini dans l'une des revendications 4 à 6.

8.  Programme d'ordinateur comprenant des moyens de code-programme mettant en oeuvre le procédé tel que défini dans l'une des revendications 1 à 3 lorsque ledit programme est exécuté au sein d'un processeur.

9.  Support, capable d'être lu par un processeur , et contenant des moyens de code-programme aptes à mettre en oeuvre le procédé tel que défini dans l'une des revendications 1 à 3 lorsque ledit programme est exécuté au sein du processeur.

**Patentansprüche**

1. Verfahren zum Extrahieren von digitalen Daten, die in einem Signal enthalten sind, das von einem Nachrichtenübertragungskanal übermittelt wird, der einen Nachrichtensender, einen Nachrichtenempfänger und eine Ausbreitungseinrichtung aufweist, die sich zwischen dem Sender und dem Empfänger erstreckt, wobei das Verfahren am Ort des Empfängers (TP) aufweist:

   eine Operation zur Schätzung der Impulsantwort (R(z)) des Übertragungskanals,
   eine Transformationsoperation mit einer von der geschätzten Impulsantwort des Übertragungskanals ausgehenden Ermittlung einer zu einem transformierten Kanal zugehörigen transformierten Impulsantwort (H(z)) sogenannter minimaler Phase und mit einer Filterung des empfangenen Signals mittels eines Filters, das erlaubt, eine Entzerrung zwischen der Autokorrelation des empfangenen Signals und der Autokorrelation des gefilterten Signals (S'(z)) aufrechtzuerhalten, und
   eine auf das gefilterte Signal (S'(z)) angewandte Entzerrungsoperation unter Berücksichtigung der transformierten Impulsantwort (H(z)).

2. Verfahren nach Anspruch 1, **dadurch gekennzeichnet, daß** die transformierte Impulsantwort ausgehend von einer Autokorrelation (22) der geschätzten Impulsantwort des Übertragungskanals ermittelt wird.

3. Verfahren nach Anspruch 1, **dadurch gekennzeichnet, daß** die transformierte Impulsantwort ausgehend von einer Zerlegung (30,31) des Polynoms, das die Impulsantwort des Übertragungskanals repräsentiert, in das Produkt aus einem ersten Polynom ($G_1$), dessen Nullstellen alle einen Betrag größer 1 haben, und einem zweiten Polynom ($G_2$), dessen Nullstellen alle einen Betrag kleiner als 1 haben, ermittelt wird.

4. Vorrichtung zum Extrahieren von digitalen Daten, die in einem Signal enthalten sind, das von einem Nachrichtenübertragungskanal übermittelt wird, der einen Nachrichtensender, einen Nachrichtenempfänger und eine Ausbreitungseinrichtung aufweist, die sich zwischen dem Sender und dem Empfänger erstreckt, wobei die Vorrichtung im Empfänger (TP) aufweist:

   eine Schätzungseinrichtung (BST), die in der Lage ist, eine Schätzung der Impulsantwort des Übertragungskanals auszuführen,
   eine Transformationseinrichtung (BTR) mit einem Vorverarbeitungsblock, der in der Lage ist, ausgehend von der geschätzten Impulsantwort des Übertragungskanals eine zu einem transformierten Kanal zugehörige transformierte Impulsantwort sogenannter minimaler Phase zu ermitteln, und mit einem Filter, das in der Lage ist, eine Filterung des empfangenen Signals auszuführen, die erlaubt, eine Entzerrung zwischen der Autokorrelation des empfangenen Signals und der Autokorrelation des gefilterten Signals aufrechtzuerhalten, und
   einen Entzerrer (BEQ), der in der Lage ist, eine Entzerrungsoperation auf das gefilterte Signal unter Berücksichtigung der transformierten Impulsantwort anzuwenden.

5. Vorrichtung nach Anspruch 4, **dadurch gekennzeichnet, daß** der Vorverarbeitungsblock in der Lage ist, die transformierte Impulsantwort (H) ausgehend von einer Autokorrelation der geschätzten Impulsantwort (R) des Übertragungskanals zu ermitteln.

6. Vorrichtung nach Anspruch 4, **dadurch gekennzeichnet, daß** der Vorverarbeitungsblock die transformierte Impulsantwort (H) ausgehend von einer Zerlegung des Polynoms (R), das die Impulsantwort des Übertragungskanals repräsentiert, in das Produkt aus einem ersten Polynom ($G_1$), dessen Nullstellen alle einen Betrag größer 1 haben, und einem zweiten Polynom ($G_2$), dessen Nullstellen alle einen Betrag kleiner 1 haben, ermittelt.

7. Digitaler Empfänger, **dadurch gekennzeichnet, daß** er eine Vorrichtung, so wie sie in einem der Ansprüche 4 bis 6 definiert ist, aufweist.

8. Computerprogramm mit Codeprogrammeinrichtungen, die das Verfahren, so wie es in einem der Ansprüche 1 bis 3 definiert ist, durchführen, wenn das Programm in dem Prozessor ausgeführt wird.

9. Träger, der von einem Prozessor gelesen werden kann und Codeprogrammeinrichtungen aufweist, die in der Lage sind, das Verfahren, so wie es in einem der Ansprüche 1 bis 3 definiert ist, durchzuführen, wenn das Programm in dem Prozessor ausgeführt wird.

# EP 1 162 802 B1

**Claims**

1. Process for extracting digital data contained in a signal conveyed by an information transmission channel comprising an information sender, an information receiver and a means of propagation extending between the sender and the receiver, comprising at the level of the receiver (TP),

    a processing operation for estimating the impulse response (R(z)) of the transmission channel,

    an equalization processing operation comprising a determination on the basis of the estimated impulse response of the transmission channel, of a so-called phase minimum transformed impulse response (H(z)) corresponding to a transformed channel, and a filtering of the signal received by a filter making it possible to preserve equality between the autocorrelation of the signal received and the autocorrelation of the filtered signal (S'(z)), and

    an equalization processing operation applied to the filtered signal (S'(z)) whilst taking account of the said transformed impulse response (H(z)).

2. Process according to Claim 1, **characterized in that** the transformed impulse response is determined on the basis of an autocorrelation (22) of the estimated impulse response of the transmission channel.

3. Process according to Claim 1, **characterized in that** the transformed impulse response is determined on the basis of a decomposition (30, 31) of the polynomial representative of the impulse response of the transmission channel into the product of a first polynomial ($G_1$) whose roots all have a modulus greater than 1 and of a second polynomial ($G_2$) whose roots all have a modulus less than 1.

4. Device for extracting digital data contained in a signal conveyed by an information transmission channel comprising an information sender, an information receiver and a means of propagation extending between the sender and the receiver, comprising in the receiver (TP),

    estimation means (BST) able to perform an estimation processing of the impulse response of the transmission channel,

    transformation means (BTR), comprising a preprocessing block able to determine on the basis of the estimated impulse response of the transmission channel, a so-called phase minimum transformed impulse response corresponding to a transformed channel, and a filter able to perform a filtering of the signal received making it possible to retain equality between the autocorrelation of the signal received and the autocorrelation of the filtered signal, and

    an equalizer (BEQ) able to apply an equalization processing operation to the filtered signal whilst taking account of the said transformed impulse response.

5. Device according to Claim 4, **characterized in that** the preprocessing block is able to determine the transformed impulse response (H) on the basis of an autocorrelation of the estimated impulse response (R) of the transmission channel.

6. Device according to Claim 4, **characterized in that** the preprocessing block determines the transformed impulse response (H) on the basis of a decomposition of the polynomial (R) representative of the impulse response of the transmission channel into the product of a first polynomial ($G_1$) whose roots all have a modulus greater than 1 and of a second polynomial ($G_2$) whose roots all have a modulus less than 1.

7. Digital receiver, **characterized in that** it incorporates a device as defined in one of Claims 4 to 6.

8. Computer program comprising program-code means implementing the process as defined in one of Claims 1 to 3 when the said program is executed within a processor.

9. Support, capable of being read by a processor, and containing program-code means able to implement the process as defined in one of Claims 1 to 3 when the said program is executed within the processor.

FIG.1

# FIG.2

BTR

De CAN

De BST

| S(z) | | R(z) |

20

Filtré par R*(z⁻¹)

22

Calcul K(z)

21

Filtré par $\dfrac{1}{H^{\star}(z^{-1})}$

23

Calcul H(z)

S'(z)

H(z)

BEQ

# FIG.3

# FIG.4

BTR

De CAN

De BST

$S(z)$

$R(z)$

41

40

Filtré par $G_1^*(z^{-1})$

Calcul $G_1(z)$

42

Filtré par $\dfrac{1}{G_1(z)}$

$S'(z)$

43

Nouvelle estimation du canal après filtrage

$S'(z)$

$H(z)$

BEQ